# EUROPÄISCHE PATENTANMELDUNG

(11) **EP 2 060 906 A1**
(43) Veröffentlichungstag der Anmeldung: **20.05.2009**
(21) Anmeldenummer: 09000913.5
(22) Anmeldetag: 29.09.1999
(51) Int. Cl.: G01N 21/86

(54) **Verfahren zur photometrischen Auswertung von Testelementen**

(30) Priorität: 29.09.1998 DE 19844500
(62) Teilanmeldung aus: 99950567.0
(71) Anmelder: Roche Diagnostics GmbH, 68298 Mannheim (DE)
(72) Erfinder: Miltner, Karl, 67227 Frankenthal (DE); Ruppender, Uwe, 68161 Mannheim (DE); Wersig, Christian, 67098 Bad Dürkheim (DE); Zimmer, Volker, 67229 Laumersheim (DE)
(74) Vertreter: Silber, Anton

(57) **Zusammenfassung**

Die Erfindung betrifft ein Verfahren zur photometrischen Auswertung eines Testelementes mit Erkennung eines Probenauftrages auf eine flächige Nachweiszone (10) des Testelementes mit den Schritten
- Bestrahlen eines Kontrollbereiches (B1) der Nachweiszone,
- Zuführung von Probeflüssigkeit zu der Nachweiszone in der Weise, daß eine erste Zone der Nachweiszone früher in Kontakt mit der Probeflüssigkeit kommt, als eine zweite Zone, die lateral von der ersten Zone entfernt ist,
- Überwachung der von dem Kontrollbereich reflektierten oder durch den Kontrollbereich transmittierten Strahlung,
- Erkennen einer Anwesenheit von Probeflüssigkeit in dem Kontrollbereich aufgrund einer Veränderung der reflektierten oder transmittierten Strahlung,
- Bestrahlen mindestens eines Nachweisbereiches (B2) der Nachweiszone, wobei der Nachweisbereich näher an der ersten Zone gelegen ist als der Kontrollbereich,
- Detektieren von Strahlung, die von dem Nachweisbereich reflektiert oder durch den Nachweisbereich transmittiert wurde,
- Auswertung der detektierten Strahlung zur Ermittlung der Konzentration eines Analyten in der Probeflüssigkeit,
dadurch gekennzeichnet, daß
bei Erkennen einer Anwesenheit von Probeflüssigkeit in dem Kontrollbereich ein für einen Benutzer erkennbares Signal ausgegeben wird, daß die Zuführung von Probeflüssigkeit abgebrochen werden kann.

## Beschreibung

Die vorliegende Erfindung betrifft ein Verfahren zur photometrischen Auswertung von Testelementen mit Erkennung eines Probenauftrags auf eine flächige Nachweiszone des

Testelementes.

Die photometrische Auswertung von Testelementen stellt eines der gebräuchlichsten Verfahren zur schnellen Bestimmung der Konzentration von Analyten in Proben dar. Photometrische Auswertungen werden allgemein im Bereich der Analytik, der Umweltanalytik und vorallem im Bereich der medizinischen Diagnostik eingesetzt. Insbesondere im Bereich der Blutglukosediagnostik aus Kapillarblut besitzen Testelemente, die photometrisch ausgewertet werden, einen großen Stellenwert.

Ein allgemeiner Trend bei der Durchführung analytischer Tests ist es, die Probenmengen zu reduzieren. Dies liegt häufig darin begründet, daß nur geringe Probenmengen vorhanden sind. Beispielsweise im Bereich der Blutzuckerbestimmung entnimmt sich der Diabetiker selbst einen Blutstropfen aus der Fingerbeere und eine Verringerung der für den Test notwendigen Blutmenge bringt einen deutlichen Gewinn an Convenience. Dies liegt vor allem daran, daß der Stich zur Blutgewinnung weniger tief gewählt werden kann. Verbunden mit einer Reduktion der Probenmengen ist eine Verkleinerung der Testelemente und insbesondere der Nachweiszonen, in denen die eigentliche Reaktion der Probe mit den Analyten abläuft. Um eine exakte photometrische Auswertung durchführen zu können, ist daher eine präzise Positionierung der Nachweiszone notwendig. Im Stand der Technik sind eine Vielzahl von Testelementhalterungen bekannt, mit denen eine recht genaue Relativpositionierung von Nachweiszone und Meßoptik erfolgt. Beispielhaft sei an dieser Stelle das europäische Patent EP-B-0 618 443 (entsprechend: US-5,424,035) genannt, bei dem eine Positionierung der Nachweiszonen des Testelementes sowohl lateral als auch vertikal zur Meßoptik erfolgt. Stellvertretend für eine Vielzahl weiterer Analysesysteme, die eine Positionierung von Teststreifen durchführen, sei noch das Dokument EP-A-0 319 922 genannt. Die im Stand der Technik bekannten Systeme arbeiten jedoch mit Nachweiszonen, die 5 mm x 5 mm überschreiten. Dementsprechend ist eine Positionierung in der im Stand der Technik bekannten Art und Weise relativ unproblematisch. Wird die Nachweiszone in ihrer lateralen Ausdehnung hingegen verkleinert, so müssen sowohl bei der Produktion der Testelemente als auch bei der Positionierung innerhalb eines Auswertesystems große Anstrengungen unternommen werden, um zu verläßlichen Analyseergebnissen zu gelangen. Die Aufgabe der vorliegenden Erfindung bestand darin, ein Verfahren und eine Vorrichtung zur photometrischen Auswertung von Testelementen vorzuschlagen, mit dem auch Testelemente mit kleinen Nachweiszonen verläßlich ausgewertet werden können.

Die vorstehende Aufgabe wird durch ein Verfahren zur photometrischen Auswertung von Testelementen gelöst, bei dem das Testelement in eine Halterung eingebracht wird, in der seine Nachweiszone so positioniert ist, daß sie gegenüber einer Beleuchtungseinheit mit mindestens zwei Lichtquellen angeordnet ist (vgl. EP 99 950 567.0). Nach einem Inkontaktbringen der Nachweiszone mit der zu analysierenden Probe wird eine erste Lichtquelle aktiviert, um die Nachweiszone zu bestrahlen. Von der Nachweiszone reflektiertes oder durch die Nachweiszone transmittiertes Licht wird als erstes Detektionssignal detektiert. Nachfolgend wird eine zweite Lichtquelle aktiviert, mit der ein zweiter Bereich der Nachweiszone bestrahlt wird, der gegenüber dem ersten Bereich in Richtung der erwarteten Positionierungstoleranz versetzt ist. Das von diesem Bereich reflektierte oder durch diesen Bereich transmittierte Licht wird als zweites Detektionssignal detektiert. Die von den beiden Bereichen erhaltenen Detektionssignale werden verglichen und geprüft, welches der Signale durch Beleuchtung eines vollständig auf der Nachweiszone liegenden Bereiches gewonnen wurde. Ein entsprechendes Detektionssignal wird ausgewählt und in prinzipiell bekannter Weise zur Ermittlung der Analytkonzentration ausgewertet.

Gegenstand der vorliegenden Erfindung ist ein Verfahren, mit dem eine ausreichende Zugabe von Probeflüssigkeit zu dem Testelement bzw. der Nachweiszone schnell erkannt und dem Benutzer rückgemeldet werden kann.

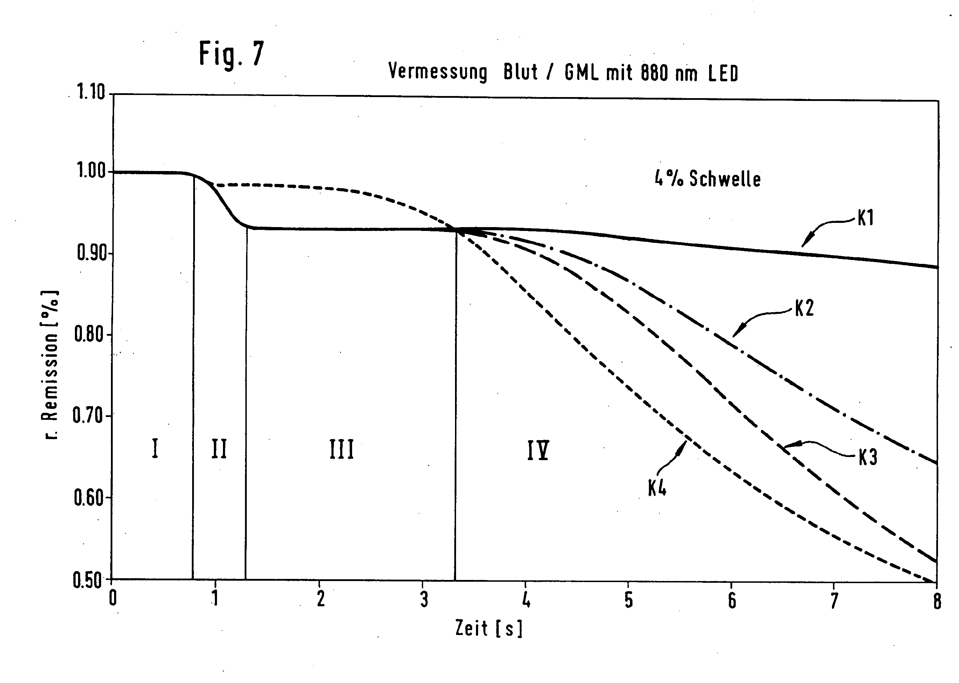

Im Bereich der Analyse mit Testelementen stellt es einen großen Gewinn an Convenience dar, wenn die Zeit zur Aufgabe von Probeflüssigkeit auf ein Testelement verringert werden kann und wenn ebenfalls rückgemeldet wird, ob die aufgegebene Probenmenge ausreichend ist. Bei Testelementen, die mit einem elektrochemischen Prinzip arbeiten, ist es seit einiger Zeit üblich, dem Benutzer anzuzeigen, wenn Probeflüssigkeit in die Auswertezone eingedrungen ist, so daß er mit einer Zugabe von Probe aufhören kann. Bei Testelementen auf elektrochemischem Prinzip ist eine solche Erkennung auf einfache Weise durch eine Leitfähigkeitsmessung möglich. Im Bereich der optischen Vermessung von Testelementen ist eine entsprechend schnelle Auftragserkennung jedoch nicht ohne weiteres möglich. In den Dokumenten US-4,109,261 und EP-A-0 256 806 sind beispielsweise Verfahren beschrieben, bei denen eine Probenaufgabe durch die Optik, die die Messung durchführt, erkannt und als Startsignal für das Abwarten einer Inkubationszeit verwendet wird. Es erfolgt bei den hier beschriebenen Verfahren keine Rückmeldung an den Benutzer, daß er genügend Probeflüssigkeit aufgegeben hat und eine weitere Zugabe beenden kann. Weiterhin werden bei den beschriebenen Verfahren Optiken eingesetzt, die eine Farbbildung in der Nachweiszone des Testelementes erkennen. Wie aus Figur 7 dieser Anmeldung zu erkennen ist, vergehen zwischen Kontaktierung der Nachweiszone mit Probeflüssigkeit und der beginnenden Farbbildung mehrere Sekunden. Wenn z. B. bei einem Blutzuckertest der Benutzer seinen Finger so lange an das Testelement halten muß, bis eine beginnende Farbbildung erkannt wird, so wird dies von ihm als eine Einschränkung seiner Bewegungsfreiheit empfunden. Daher besteht ein Bedürfnis, die Zeit zur Zugabe bzw. bis zur Erkennung der Probeflüssigkeit zu verringern. In der EP-A-0 166 876 ist beispielsweise ein Blutzuckermeßgerät beschrieben, bei dem eine Probenzugabe erkannt wird, es ist jedoch keine Kontrolle möglich, ob die Probenmenge ausreichend ist.

Im Rahmen der vorliegenden Erfindung wird daher ein Verfahren vorgeschlagen, das eine schnelle Erkennung eines Probenauftrages auf ein Testelement ermöglicht. Das erfindungsgemäße Verfahren zur photometrischen Auswertung von Testelementen hat folgende Schritte:
- Bestrahlen eines Kontrollbereiches der Nachweiszone,
- Zuführung von Probeflüssigkeit zu der Nachweiszone in der Weise, daß eine erste Zone der Nachweiszone früher in Kontakt mit der Probeflüssigkeit kommt als eine zweite Zone, die lateral von der ersten Zone entfernt ist,
- Überwachen der von dem Kontrollbereich reflektierten oder durch den Kontrollbereich transmittierten Strahlung,
- Erkennung einer Anwesenheit von Probeflüssigkeit in dem Kontrollbereich aufgrund einer Veränderung der reflektierten oder transmittierten Strahlung,
- Bestrahlung eines Nachweisbereiches der Nachweiszone, wobei der Nachweisbereich näher an der ersten Zone gelegen ist als der Kontrollbereich,
- Detektieren von Strahlung, die von dem Nachweisbereich reflektiert oder durch den Nachweisbereich transmittiert wurde,
- Auswertung der detektierten Strahlung zur Ermittlung der Konzentration eines Analyten in der Probeflüssigkeit,
dadurch gekennzeichnet, daß
- bei Erkennen einer Anwesenheit von Probeflüssigkeit in dem Kontrollbereich ein für einen Benutzer erkennbares Signal ausgegeben wird, daß die Zuführung von Probeflüssigkeit abgebrochen werden kann.

Im Folgenden wird zunächst ein Verfahren zur Kompensation von Positionierungstoleranzen beschrieben (vgl. EP 99 950 567.0).

Eine Vorrichtung, mit der das hier beschriebene Verfahren durchgeführt werden kann, besitzt eine Halterung, in der ein Testelement gegenüber einer ebenfalls zu der Vorrichtung gehörenden Beleuchtungseinheit positioniert wird. Als Halterung können im Rahmen der folgenden Erfindung aus dem Stand der Technik bekannte Halterungen, insbesondere die in EP-B-0 618 443 beschriebene Halterung, eingesetzt werden. Trotz der hier beschriebenen Vorgehensweise, die zur Stabilisierung der Auswertung gegenüber Positionstoleranzen dient, ist es wünschenswert, mittels der Halterung bereits eine möglichst genaue Positionierung der Nachweiszone zu erzielen. Die Positionstoleranzen lassen sich jedoch nicht unter eine bestimmte Schwelle senken, was deutlicher wird, wenn die in die Positionstoleranzen hereinspielenden Einzelgrößen betrachtet werden. Auf seiten des Auswertesystems gibt es bereits eine Reihe von Toleranzen für eine relative Positionierung von Halterung und Beleuchtungseinheit.Weitere Toleranzen werden durch die Positionierung des Testelementes innerhalb der Halterung hervorgerufen, zumal ein gewisses Spiel zwischen Testelement und Halterung notwendig ist, um dem Benutzer ein Einführen des Testelementes in den Halter zu ermöglichen. Außerdem unterliegt das Testelement selbst gewissen Herstellungstoleranzen, die insbesondere die Breite des Testelementes betreffen. Schließlich treten noch Toleranzen bei der relativen Lage der Nachweiszone zu dem Testelement bzw. dem Trägermaterial des Testelementes auf. Insbesondere bei Kapillarspalttestelementen kann die Verschiebung der Nachweiszone in Richtung der Breite des Testelementes erheblich sein, worauf weiter unten detaillierter eingegangen wird.

Eine Vorrichtung zur photometrischen Auswertung beinhaltet weiterhin eine Beleuchtungseinheit mit mindestens einer ersten und einer zweiten Lichtquelle. Mit diesen Lichtquellen werden nebeneinander liegende Bereiche der Nachweiszone beleuchtet. Die Lichtquellen sind so angeordnet, daß die Zentren der beleuchteten Bereiche auf der Nachweiszone in Richtung einer zu erwartenden Positionierungstoleranz gegeneinander verschoben sind. Dies kann beispielsweise erreicht werden, indem die Lichtquellen selbst gegeneinander versetzt sind und im Wesentlichen senkrecht auf die Nachweiszone strahlen. Die Lichtquellen können jedoch auch so angeordnet sein, daß sie schräg auf die Nachweiszone strahlen und der Abstand der bestrahlten Bereiche im wesentlichen durch die Verkippung der Lichtquellen gegenüber der Senkrechten relativ zur Nachweiszone erzielt wird. Als Lichtquellen sind prinzipiell die im Stand der Technik für diagnostische Nachweissysteme bekannten Lichtquellen geeignet. Bevorzugt sind Leuchtdioden, da diese einen verhältnismäßig geringen Energieverbrauch aufweisen und ein relativ schmalbandiges Spektrum liefern. Besonders bevorzugt sind miniaturisierte Leuchtdioden, die direkt auf einer Halbleiterplatine aufgebracht werden können. Solche Leuchtdioden sind in Abmessungen erhältlich, die auch ohne zwischengeschaltete Optik zu geeignet großen Leuchtflecken auf der Nachweiszone führen. Vorteilhaft wird im Rahmen der vorliegenden Erfindung jedoch zusätzlich zu den Lichtquellen eine Optik aus Linsen und gegebenenfalls auch Blenden eingesetzt. Es ist von Vorteil, die Form der bestrahlten Bereiche der Form der Nachweiszone und den zu erwartenden Toleranzen anzupassen. Bei einer rechteckigen Nachweiszone ist es beispielsweise vorteilhaft, ovale Bereiche oder sogar rechteckige Bereiche zu beleuchten. Dies kann beispielsweise durch geeignete Linsen oder Blenden erreicht werden.

Im Rahmen der vorliegenden Erfindung ist es auch vorgesehen, mehr als 2 Lichtquellen einzusetzen. Ist in einer Richtung der Nachweiszone eine besonders große Positionierungstoleranz zu erwarten, können beispielsweise 3 Lichtquellen eingesetzt werden, die in Richtung der zu erwartenden Positionierungstoleranz versetzte Bereiche auf der Nachweiszone beleuchten. Die vorliegende Erfindung ist auch geeignet, Positionierungstoleranzen in mehr als einer Richtung aufzufangen. Beispielsweise können 4 Lichtquellen verwendet werden, die vier in Form eines Quadrates oder Rechtecks angeordnete Bereiche beleuchten. Mit einer derartigen Anordnung kann eine Fehlmessung durch Positionierungsungenauigkeit sowohl in Richtung der einen Seite des Quadrates als auch in der dazu senkrecht angeordneten Richtung vermieden werden.

Bei einem photometrischen Auswerteverfahren von Testelementen wird eine Probe mit der Nachweiszone des Testelementes in Kontakt gebracht. Das Inkontaktbringen ist so zu verstehen, daß die Proben entweder direkt auf die Nachweiszone aufgegeben werden, oder daß Probe in die Nachweiszone hineintransportiert wird. Letzteres ist insbesondere bei Kapillarspalttestelementen der Fall, bei denen die Probe (in der Regel Kapillarblut aus der Fingerbeere) an den Kapillarspalt herangeführt wird und durch diesen der Nachweiszone zugeführt wird. Es sind auch Ausführungsformen denkbar, bei denen eine feste Probe, beispielsweise durch Reiben eines Vlieses an einem Gegenstand, auf das Vlies aufgebracht wird, und die Probe darauffolgend mittels eines Hilfsfluids aus dem Vlies zur Nachweiszone transportiert wird, wie dies beispielsweise bei einigen Drogenschnelltesten der Fall ist. Weiterhin gibt es Chromatographieteststreifen, bei denen die Probe über saugfähige Materialien in die Nachweiszone hineingebracht wird. Aus dem vorstehend genannten ergibt sich, daß Proben im Sinne der Erfindung in erster Linie Probeflüssigkeiten, wie beispielsweise Blut sind, daß jedoch auch feste Probenmaterialien in Betracht kommen.

Die mit der Nachweiszone in Kontakt gebrachte Probe führt bei Testelementen zu einer detektierbaren Veränderung der Nachweiszone. Die Erzeugung von detektierbaren Veränderungen in Folge der Reaktion eines in der Probe enthaltenen Analyten mit einem Reagenzsystem ist im Stand der Technik hinlänglich bekannt, so daß an dieser Stelle nicht näher darauf eingegangen wird. Für die vorliegende Erfindung ist es jedoch relevant, daß die detektierbare Veränderung mit den verwendeten Lichtquellen und dem verwendeten Detektor ausreichend detektiert werden kann. Dies ist dann der Fall, wenn in der Nachweiszone eine Verfärbung gebildet wird, die von den Lichtquellen emittierte Strahlung absorbiert und somit das transmittierte oder reflektierte Licht schwächt. Es ist jedoch auch der umgekehrte Fall möglich, bei dem ein Farbstoff, dessen Anwesenheit photometrisch detektiert wird, durch die Reaktion des Reagenzsystemes mit einem Analyten zerstört wird und das eigentliche Meßsignal in einer Abnahme der Schwächung des transmittierten oder reflektierten Lichtes liegt. Die Bezeichnung Licht oder Lichtquelle soll im Rahmen der Erfindung dahingehend verstanden werden, daß Wellenlängenbereiche umfaßt sind, die mit optischen Anordnungen anwendbar sind, d. h. neben dem visuellen Bereich auch UV und IR.

Im Rahmen der vorliegenden Erfindung können im Stand der Technik hinlänglich bekannte Detektoren, insbesondere Halbleiterdetektoren, eingesetzt werden. Wichtig ist es, den bzw. die Detektoren so auszuwählen, daß von der Nachweiszone reflektierte bzw. durch die Nachweiszone transmittierte Strahlung zu einem Signal führt, wenn der Detektor mit ihr beleuchtet wird. Vorteilhaft können Detektoren eingesetzt werden, die ihr Empfindlichkeitsmaximum im Bereich der reflektierten oder transmittierten Strahlung haben. Gegebenenfalls können auch Filter eingesetzt werden, die selektiv die Meßstrahlung hindurchlassen, um die Detektion gegen Störlichteinflüsse stabiler zu machen.

Zur Durchführung des hier beschriebenen Verfahrens wird zunächst eine erste Lichtquelle der Beleuchtungseinheit zur Bestrahlung eines ersten Bereiches der Nachweiszone aktiviert und das während der Aktivierung am Detektor anliegende Signal als erstes Detektionssignal aufgenommen. Daraufhin wird die erste Lichtquelle deaktiviert und die zweite Lichtquelle zur Bestrahlung eines zweiten Bereiches aktiviert, wobei das am Detektor anliegende Signal als zweites Detektionssignal aufgezeichnet wird. Elektrische Schaltungen und Verfahren zur Aktivierung von Lichtquellen, insbesondere Leuchtdioden, sind im Stand der Technik hinlänglich bekannt. Exemplarisch sei auf das Dokument US-5,463,467 hingewiesen, in dem eine Aktivierung von Leuchtdioden zur Durchführung von photometrischen Analysen beschrieben ist. Im Rahmen der vorliegenden Erfindung ist es auch vorgesehen, die Lichtquellen mittels Signalen zu aktivieren, die es ermöglichen, Fremdlichteinflüsse aus dem detektierten Signal zu eleminieren, wie dies beispielsweise in der genannten US-5,463,467 beschrieben ist.

Ein wesentlicher Schritt des hier beschriebenen Verfahrens besteht darin, die detektierten Signale zu vergleichen und zu ermitteln, welches der Signale bzw. ob beide Signale durch Beleuchtung eines vollständig auf der Nachweiszone liegenden Bereiches gewonnen wurden. Diese Ermittlung kann auf verschiedenen Wegen erfolgen. Findet in der Nachweiszone durch den Analyten eine farbbildende Reaktion statt, so können erstes und zweites Detektionssignal verglichen werden und das stärker abgeschwächte Lichtsignal wird als vollständig auf der Nachweiszone liegend ausgewählt. Wird hingegen eine Reaktion durchgeführt, bei der durch den Analyten Farbe abgebaut wird, so wird als vollständig auf der Nachweiszone lokalisiertes Signal dasjenige ausgewählt, das die geringste Abschwächung erfahren hat. Die beiden genannten Wege können durchgeführt werden, ohne daß an der Nachweiszone vor Reaktion mit dem Analyten eine Messung durchgeführt wurde, um einen Leerwert zu ermitteln. Bevorzugt ist es jedoch im Rahmen der Erfindung, wenn zunächst mit der ersten und zweiten Lichtquelle Messungen an der Nachweiszone vor Reaktion mit der Probe durchgeführt werden. Die so ermittelten Detektionssignale können als Basis sowohl für die Ermittlung, welches Signal auf eine vollständige Lage des bestrahlten Bereiches auf der Nachweiszone zurückgeht, als auch als Basiswert (sogenannter Leerwert) für die Bestimmung der Analytkonzentration verwendet werden. Sind Messungen mit den Lichtquellen an einem noch nicht reagierten Testelement durchgeführt worden, so kann der erfindungsgemäße Ermittlungsschritt vorteilhaft durchgeführt werden, indem für jede Lichtquelle der Signalhub vor und nach Reaktion der Nachweiszone mit der Probe ermittelt und diejenige Lichtquelle zur Ermittlung der Analytkonzentration ausgewählt wird, für die der höhere Signalhub erhalten wurde.

Die Auswahl einer der mindestens zwei Lichtquellen als für die Ermittlung der Analytkonzentration geeignet kann auch erfolgen, ohne daß hierfür ein Inkontaktbringen der Nachweiszone mit der Probe notwendig ist. Dies kann beispielsweise erreicht werden, indem die Nachweiszone aus einem hellen Material besteht und das Testelement im an die Nachweiszone angrenzenden Bereich dunkel ausgestaltet ist. Werden an einem derartigen Testelement Messungen mit erster und zweiter Lichtquelle durchgeführt und verglichen, so kann die Lichtquelle, mit der das höhere Remissionssignal erhalten wird, als geeignet für die Ermittlung der Analytkonzentration ausgewählt werden. Weiterhin ist es möglich, die Nachweiszone zumindest teilweise transparent zu gestalten, während der an die Nachweiszone angrenzende Bereich des Testelementes im wesentlichen lichtundurchlässig ist. Wird nunmehr eine Transmissionsmessung durchgeführt, so kann die Lichtquelle ausgewählt werden, mit der eine höhere Transmission ermittelt wurde. Wurde im Vorangehenden auf ein höheres oder niedrigeres Signal Bezug genommen, so kann damit ein "Rohsignal" gemeint sein, wie es am Detektor bei Aktivierung der Lichtquellen anliegt. Vorteilhaft werden die Rohsignale vor ihrem Vergleich noch korrigiert, d. h. es wird die Beleuchtungsgeometrie sowie die von Lichtquelle zu Lichtquelle schwankende Intensität berücksichtigt. Dies kann beispielsweise durch Normierung der Signale auf die Leerwerte (Quotientenbildung von aktuellem Signal und Signal bei unreagiertem Testelement oder Standard) erfolgen.

Die vorliegende Erfindung betrifft ein Verfahren zur photometrischen Auswertung eines Testelementes, bei dem eine Erkennung des Probenauftrages durchgeführt wird. Bei diesem Verfahren wird zunächst ein sogenannter Kontrollbereich der Nachweiszone eines Testelementes bestrahlt und die von diesem Kontrollbereich reflektierte oder durch den Kontrollbereich transmittierte Strahlung überwacht. Überwachen bedeutet in diesem Zusammenhang, daß zeitlich auseinanderliegende Messungen der reflektierten oder transmittierten Strahlung durchgeführt werden. In der Regel werden Messungen in einem Abstand von Sekundenbruchteilen durchgeführt. Für die Auswahl der Zeitabstände wird in der Praxis so vorgegangen, daß der Zeitabstand zwischen zwei Messungen kleiner gewählt wird als die Zeitverzögerung, mit der die Erkennung einer Meßwertänderung toleriert werden kann. Während der Kontrollbereich überwacht wird, wird zu der Nachweiszone eine Probeflüssigkeit zugeführt. Erfindungsgemäß erfolgt dies in der Weise, daß eine erste Zone der Nachweiszone früher in Kontakt mit der Probeflüssigkeit kommt als eine zweite Zone, die lateral von der ersten Zone entfernt ist. Der Begriff lateral bezieht sich hierbei auf die Ebene der Nachweiszone. Somit weisen erste und zweite Zone bei Betrachtung der Nachweiszone von der Oberseite einen Abstand zueinander auf. Ein derartiges Heranführen der

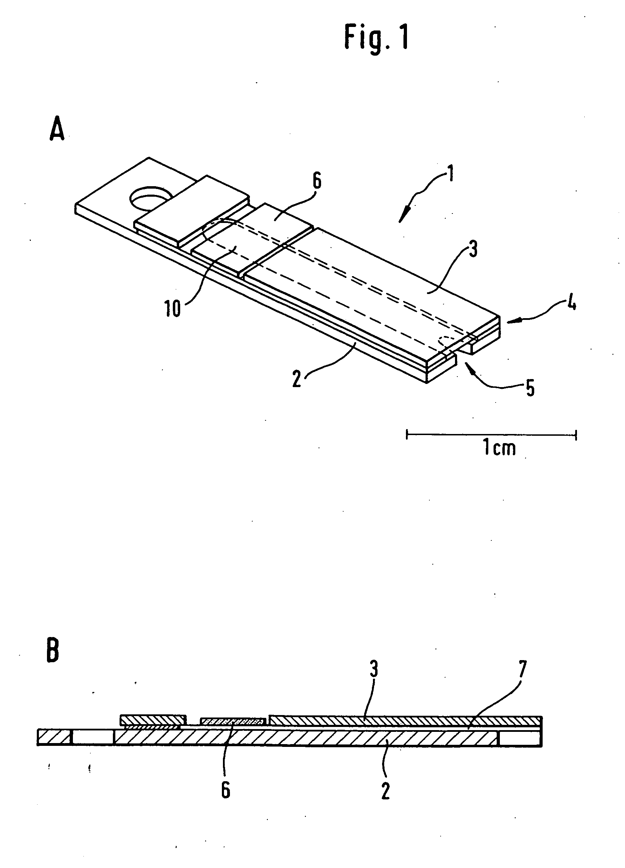

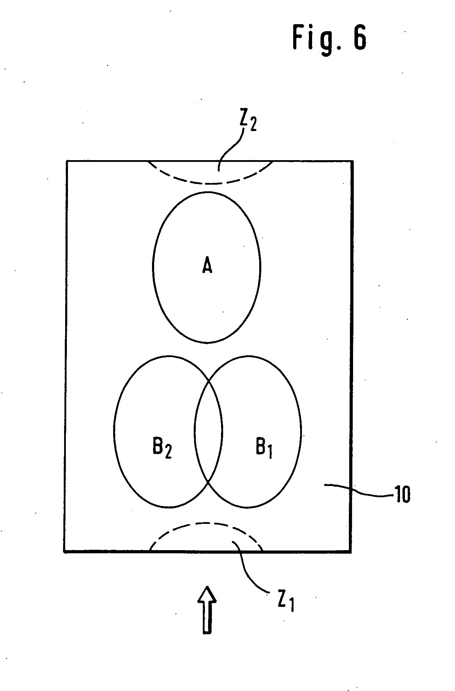

Probeflüssigkeit an eine Nachweiszone tritt beispielsweise bei Chromatographieteststreifen auf, bei denen die Probe bzw. eine Reaktionslösung der Probe von einer Seite in die Nachweiszone eindringt und die Nachweiszone lateral durchwandert. Weiterhin tritt eine derartige Zuführung der Probeflüssigkeit dann auf, wenn ein Kapillarspalttestelement verwendet wird, bei dem Kapillarspalt und Nachweiszone koplanar angeordnet sind. Dies kann beispielsweise in der Weise erfolgen, daß der Kapillarspalt an einer Kante der Nachweiszone endet und Probeflüssigkeit aus dem Kapillarspalt von dieser Kontaktstelle aus in die Nachweiszone eindringt oder aber der Kapillarspalt kann, wie dies in Figur 1 dargestellt ist, unterhalb der Nachweiszone angeordnet sein. In den genannten Fällen kommt die Probeflüssigkeit mit einer ersten Zone der Nachweiszone früher in Kontakt als mit einer zweiten Zone. In der Figur 6 ist dies durch die Zonen Z1 und Z2 angedeutet. Die Probeflüssigkeit dringt über einen Kapillarspalt, der unterhalb der Nachweiszone (10) angeordnet ist, in Richtung des Pfeiles in die Nachweiszone ein. Hierbei kommt die Zone Z1 eher mit der Probeflüssigkeit in Kontakt als die Zone Z2.

Bei dem erfindungsgemäßen Verfahren erfolgt die Erkennung eines Probenauftrages anhand einer Veränderung der reflektierten oder transmittierten Strahlung in dem Kontrollbereich. Eine Veränderung bedeutet in diesem Zusammenhang, daß während des Überwachens eine Signaländerung erfolgt, d. h. von dem unreagierten Kontrollbereich der Nachweiszone werden andere Transmisions- oder Reflektionssignale erhalten als von einem Kontrollbereich, der mit Probeflüssigkeit durchfeuchtet oder mit Probeflüssigkeit reagiert hat.

Zur Auswertung des Testelementes wird mindestens ein Nachweisbereich der Nachweiszone bestrahlt und von diesem Bereich reflektierte oder durch den Nachweisbereich transmittierte Strahlung detektiert und ausgewertet, um die Konzentration eines Analyten in der Probeflüssigkeit zu bestimmen. Details zur Detektion und Auswertung wurden bereits vorstehend für ein erfindungsgemäßes Verfahren zur Kompensation von Lagetoleranzen beschrieben.

Durch das Überwachen des Kontrollbereiches kann früher als bei Messung im Nachweisbereich erkannt werden, wenn Probeflüssigkeit im Kontrollbereich anwesend ist. Bei Erkennen kann ein Signal ausgegeben werden, daß eine Zuführung von Probeflüssigkeit abgebrochen werden kann. Bei einem Kapillarspalttestelement bedeutet dies beispielsweise, daß eine Blutzufuhr zu dem Kapillarspalt abgebrochen werden kann. Hierdurch ist es zum einen möglich, eine unnötige Zufuhr weiterer Probeflüssigkeit zu verhindern und somit die notwendige Probenmenge zu verringern und andererseits kürzt dieses Procedere die Zeit zur Zuführung von Probeflüssigkeit ab, was dem Benutzer entgegenkommt. Bei dem erfindungsgemäßen Verfahren kann trotzdem sichergestellt werden, daß der Nachweisbereich bzw. die Nachweisbereiche der Nachweiszone ausreichend mit Probeflüssigkeit versehen sind. Hierzu ist es vorteilhaft, wenn der Nachweisbereich näher an der ersten Zone, die zuerst mit Probeflüssigkeit in Kontakt kommt, gelegen ist, als der Kontrollbereich. Die Probeflüssigkeit benetzt das Testelement somit im Bereich der Nachweiszone früher als im Bereich der Kontrollzone und bei Anwesenheit von Probeflüssigkeit im Bereich der Kontrollzone ist sichergestellt, daß auch die Nachweiszone mit Probeflüssigkeit versorgt ist. Erfindungsgemäß ist es weiterhin bevorzugt, wenn der Kontrollbereich (Bereich A in Figur 6) mit einer Strahlung bestrahlt wird, die von der Probeflüssigkeit selbst absorbiert wird. Selbst wenn die Probeflüssigkeit selbst nicht oder nur zum Teil Strahlung absorbiert, tritt bei Befeuchtung der Kontrollzone in der Regel ein Abfall der remittierten oder transmittierten Strahlung auf. Hierdurch kann eine Anwesenheit von Probeflüssigkeit bereits festgestellt werden, noch bevor eine Reaktion mit Reagenzien in der Nachweiszone stattgefunden hat. Aus der Figur 7 ist zu erkennen, daß ein Remissionsabfall im Bereich A der in Figur 6 dargestellten Nachweiszone bereits im Zeitbereich II festgestellt werden kann. Dies beruht darauf, daß eine Durchfeuchtung des Kontrollbereiches A mittels einer 880 nm Leuchtdiode sehr schnell festgestellt werden kann. Die Erkennung einer Befeuchtung dieses Bereiches aufgrund einer in der Nachweiszone gebildeten Farbe wäre erst im Zeitbereich IV möglich gewesen. Bei dem erfindungsgemäßen Verfahren mit Erkennung eines Probenauftrages liegt der Kontrollbereich bevorzugt auf der Nachweiszone. Dies reduziert nicht nur die Zeit bis zur Erkennung, sondern ermöglicht auch eine kompakte Bauweise eines derartigen Gerätes, bei dem die optischen Komponenten eng benachbart zueinander angeordnet sein können.

### Im Folgenden wird die vorliegende Erfindung anhand einiger Figuren näher erläutert:

- Figur1:: Perspektivische und Querschnittsdarstellung eines Kapillarspalttestelementes
- Figur 2:: Querschnitt durch eine Vorrichtung längs eines eingeschobenen Testelementes
- Figur 3:: Querschnitt durch eine Vorrichtung quer zum Testelement
- Figur 4:: Blockdarstellung einer Auswertevorrichtung
- Figur 5:: Lage bestrahlter Bereiche auf der Nachweiszone
- Figur 6:: Bestrahlte Bereiche auf der Nachweiszone
- Figur 7:: Signalverlauf gemessen im Kontrollbereich
- Figur 8:: Signalverlauf bei Verschiebung des Testelements

Figur 1A zeigt ein Kapillarspalttestelement in perspektivischer Ansicht. Das Testelement besitzt eine Trägerfolie (2) und eine Deckelfolie (3). Zwischen diesen Folien befindet sich ein Abstandshalter (4), der eine Ausnehmung aufweist, so daß zwischen Trägerfolie und Deckelfolie ein Kapillarspalt gebildet wird. Zur Durchführung eines diagnostischen Testes wird Probeflüsigkeit, in der Regel Kapillarblut, an die Öffnung (5) des Kapillarspaltes herangeführt. Die Probeflüssigkeit wird aufgrund der Kappilarkräfte durch den Kanal hindurchbewegt und erreicht das Reagenzpapier (6). Das Reagenzpapier (6) ist seinerseits ebenfalls auf dem Abstandshalter (4) aufgebracht, so daß bei Anwesenheit von Probeflüssigkeit in dem Kapillarspalt (7) lediglich der mittlere Teil des Reagenzpapieres mit Probe befeuchtet wird und einer Farbbildung bzw. Signalbildung unterliegt. Dieser mittlere Bereich, der zur Bestimmung der Analytkonzentration herangezogen werden kann, wird als Nachweiszone (10) bezeichnet. Die Größe der Nachweiszone beträgt in dem dargesellten Beispiel ca. 2 x 3 mm. Eine derart kleine Nachweiszone wirft meßtechnisch insbesondere zwei Probleme auf. Zum einen muß von der Nachweiszone ein ausreichend starkes Signal erhalten werden, das eine verläßliche Bestimmung der Analytkonzentration erlaubt und andererseits muß sichergestellt werden, daß bei Auswertung der Nachweiszone keine Remissionsbeiträge von außerhalb der Nachweiszone beitragen. Beide Anforderungen sind in der Praxis eng miteinander verbunden, da man zur Erhöhung des Meßsignales bestrebt sein wird, die Nachweiszone möglichst vollständig zu vermessen, was jedoch bedeutet, daß man Gefahr läuft, Beiträge von außerhalb der Nachweiszone zu erhalten, wenn keine exakte Positionierung der Nachweiszone zur Beleuchtungseinheit sichergestellt werden kann. Das Problem der Positionierung ist bei Kapillarspalttestelementen besonders groß, da die Lage des Kapillarspaltes herstellungsbedingt relativ stark schwankt. Mit der vorliegenden Erfindung ist es jedoch auf einfache Weise möglich, einerseits einen relativ großen Teil der Nachweiszone auszuwerten und andererseits Fehlbeiträge von Bereichen außerhalb der Nachweiszone zu vermeiden.

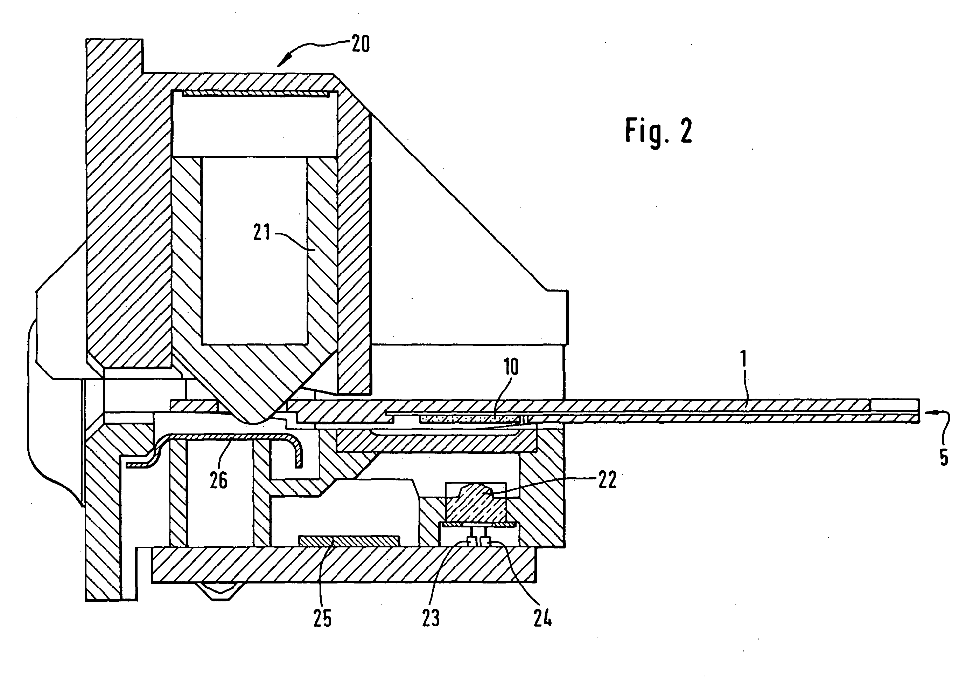

Figur 2 zeigt eine Vorrichtung (20) in einer Querschnittsdarstellung längs einem Testelement (1). Die Vorrichtung (20) besitzt einen Kanal, in den ein Testelement (1 ) eingeschoben werden kann. Figur 2 zeigt die Positionierung eines Testelementes in Auswerteposition. Zur Halterung des Testelementes in dieser Position besitzt die Vorrichtung einen verschiebbar gelagerten Zapfen (21) mit einem nach unten konisch zulaufenden Ende. Bei geeigneter Positionierung befindet sich die Spitze des Zapfens in einer Ausnehmung des Testelementes, so daß das Testelement in Richtung seiner Längsachse fixiert und positioniert wird. Der Zapfen (21) kann auch dazu dienen, die Anwesenheit eines Testelementes bzw. dessen Positionierung elektrisch zu signalisieren. Hierzu wird der Zapfen elektrisch leitfähig ausgeführt und auf der ihm gegenüberliegenden Seite der Vorrichtung ein Kontakt (26) vorgesehen. Ohne ein Testelement wird der Zapfen mittels einer Feder gegen den Kontakt (26) gedrückt und ein elektrischer Kontakt zwischen diesen beiden Elementen hergestellt. Wird nun ein Testelement eingeschoben, so schiebt es sich zunächst zwischen Zapfen (21) und Kontakt (26), so daß der elektrische Kontakt aufgehoben wird. Beim Weiterschieben greift jedoch der Zapfen (21) durch die Nut des Testelementes hindurch und der elektrische Kontakt schließt sich erneut.

In Figur 2 ist weiterhin eine optische Anordnung zur Auswertung des Testelementes dargestellt. In der Auswerteposition ist die Nachweiszone (10) des Testelementes gegenüber einer Linse (22) positioniert, auf deren gegenüberliegender Seite sich die Lichtquellen (23, 24) befinden. Die Lichtquelle (23) dient zur Beleuchtung der Nachweiszone, um eine Analytkonzentration zu ermitteln. Mit der Lichtquelle (24) wird eine Zone auf der Nachweiszone beleuchtet, die weiter von der Zugabeöffnung (5) für Probeflüssigkeit entfernt ist, als die von der Lichtquelle (23) beleuchtete Zone. Mit der Lichtquelle (24) kann demnach das erfindungsgemäße Verfahren zur Erkennung eines Probenauftrages durchgeführt werden. Aufgrund des erforderlichen Grades an Miniaturisierung sind die Lichtquellen (23, 24) als Leuchtdioden ausgeführt, die direkt auf die Halbleiterplatine aufgebracht sind.

Figur 2 zeigt weiterhin einen Halbleiterdetektor (25), der von der Nachweiszone reflektierte Strahlung detektiert.

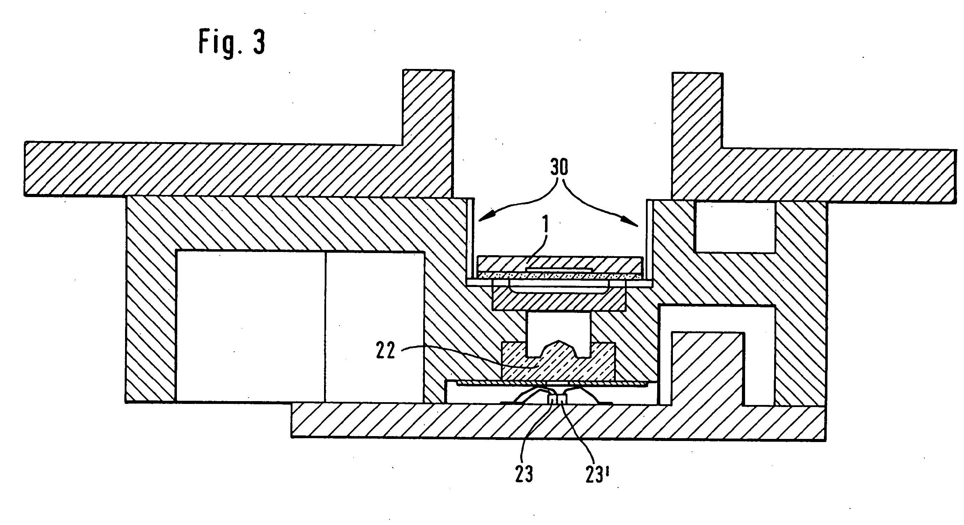

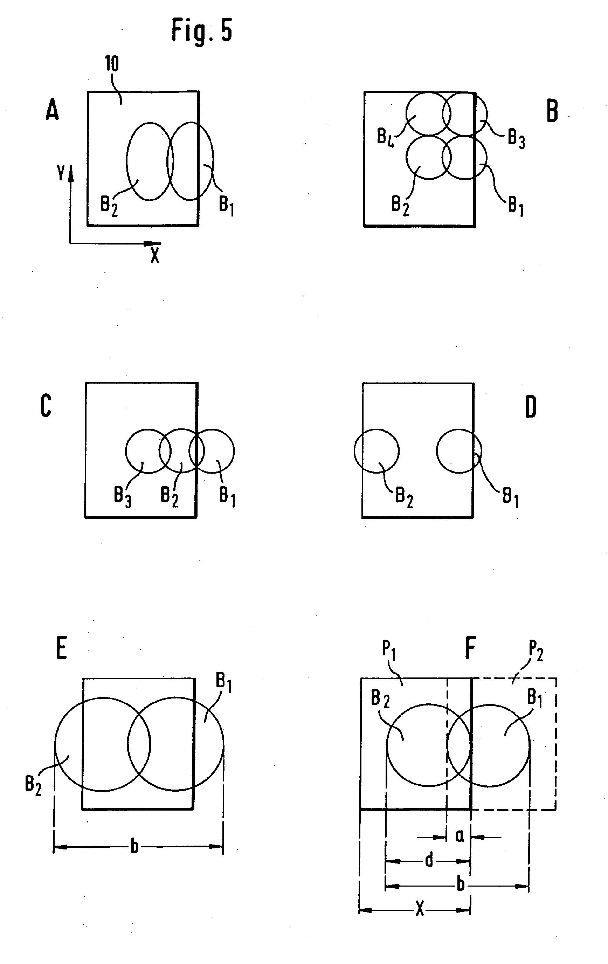

Die laterale Positionierung des Testelementes in der Vorrichtung kann aus Figur 3 entnommen werden. Das Testelement (1) befindet sich in einem Kanal (30), der eine seitliche Verschiebung weitestgehend verhindert. Aufgrund der Herstellungsschwankungen der Testelemente muß der Kanal (30) so bemessen sein, daß er auch noch die größten zu erwartenden Testelemente aufnehmen kann. Hieraus ergibt sich, daß herstellungsbedingt kleinere Testelemente in dem Kanal (30) nicht ideal positionierbar sind, sondern seitlich verschoben sein können. Um trotzdem für alle Testelemente sicher ein Signal der Nachweiszone messen zu können, das von einem beleuchteten Bereich stammt, der vollständig auf der Nachweiszone liegt, kann das erfindungsgemäße Verfahren eingesetzt werden. Hierzu besitzt die Vorrichtung die Lichtquellen (23, 23'), die nebeneinander in Querrichtung zum Testelement angeordnet sind. Für die optische Anordnung ist es von Vorteil, wenn eine Abbildung der Lichtquellen mittels einer Linse (22) oder eines Linsensystemes auf die Nachweiszone des Teselementes erfolgt. Die Beabstandung der Lichtquellen zueinander sowie zur Nachweiszone und die Auslegung der Linse (22) sind so gewählt, daß die im Zusammenhang mit Figur 5 weiter unten erläuterten Randbedingungen eingehalten werden.

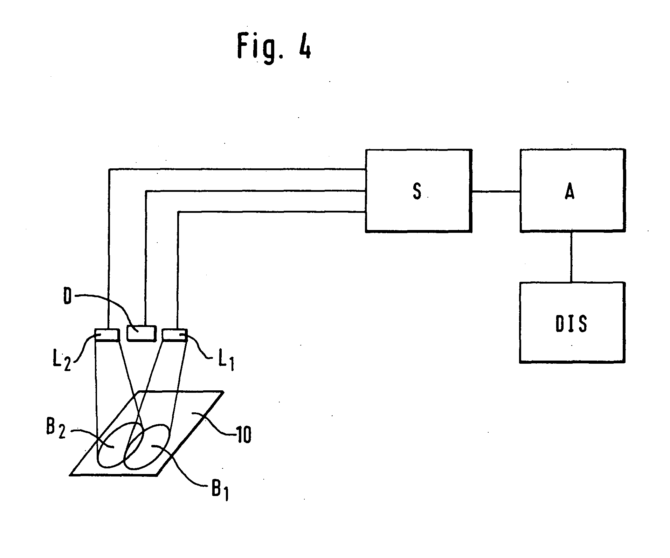

Figur 4 zeigt eine schematische Blockdarstellung einer Vorrichtung zur photometrischen Auswertung von Testelementen. Die erste Lichtquelle L1 und die zweite Lichtquelle L2 sind nebeneinander angeordnet, so daß sie voneinander verschiedene, jedoch überlappende Bereiche B 1 und B2 auf der Nachweiszone (10) beleuchten. Der Detektor (D) empfängt von der Nachweiszone (10) diffus reflektierte Strahlung und leitet das entsprechende Signal an die Steuereinheit (S) weiter. Die Steuereinheit aktiviert die Lichtquellen L1 und L2 nacheinander und registriert die jeweils vom Detektor erhaltenen Signale. Diese Signale werden an die Auswerteeinheit (A) weitergeleitet, wo die Signale miteinander verglichen werden und wie weiter oben beschrieben ein geeignetes Signal ausgewählt wird. Im dargestellten Beispiel liegen beide Bereiche B 1 und B2 vollständig auf der Nachweiszone (10), so daß beide zur Berechnung der Analytkonzentration herangezogen werden können. Dementsprechend wird eines der Signale herangezogen, um in bekannter Weise eine Analytkonzentration zu berechnen, welche dann an das Display (DIS) weitergeleitet wird. Im vorliegenden Fall kann auch ein gemitteltes Signal zur Konzentrationsbestimmung dienen.

Figur 5 zeigt einige Beispiele, wie die bestrahlten Bereiche relativ zueinander und relativ zur Nachweiszone angeordnet sein können. Figur 5A zeigt eine besonders bevorzugte Anordnung, bei der die beleuchteten Bereiche B 1 und B2 eine ovale Gestalt aufweisen und teilweise überlappen. Im dargestellten Beispiel würde das von dem beleuchteten Bereich B2 detektierte Signal zur Berechnung der Analytkonzentration herangezogen werden, da dieser Bereich vollständig auf der Nachweiszone (10) liegt, wohingegen ein von dem Bereich B1 erhaltenes Signal durch Beiträge von außerhalb der Nachweiszone verfälscht ist. In Figur 5A ist weiterhin ein Koordinatensystem angegeben, das zur vereinfachten Beschreibung der Figuren dienen soll. Bei der in Figur 5A gewählten Anordnung der beleuchteten Bereiche wird darauf abgezielt, eine Lagetoleranz der Nachweiszone in Richtung der X-Achse zu kompensieren. Hierzu werden die Bereiche der Beleuchtung so gewählt, daß eine Verbindungsgerade durch ihre Schwerpunkte im wesentlichen parallel zu der Richtung ist, in der eine Lagetoleranz erwartet wird bzw. aufgefangen werden soll. Figur 5B zeigt eine Ausführungsform, mit der eine Kompensation der Lagetoleranz sowohl in Richtung der X- als auch der Y-Achse möglich ist. Es sind hier 4 beleuchtete Bereiche gewählt worden, die in Richtung der X- und der Y-Achse gegeneinander versetzt sind. Da die Bereiche B1, B3 und B4 Remissionen mit Anteilen von außerhalb der Auswertezone hervorrufen, wird zur Auswertung der Bereich B2 herangezogen, da dieser vollständig innerhalb der Nachweiszone liegt.

In Figur 5C ist eine Ausführungsform dargestellt, mit der besonders große Lageschwankungen der Nachweiszone in Richtung der X-Achse abgefangen werden können. In Richtung der X-Achse, in der die Lagetoleranz kritisch ist, sind drei Beleuchtungsbereiche gewählt worden, die zueinander beabstandet sind. Wären nur die Bereiche B1 und B2 verwendet worden, so wäre keine geeignete Auswertung möglich gewesen, dies ist jedoch mittels des

Bereiches B3 möglich.

Figur 5D zeigt eine weniger bevorzugte Ausführungsform, bei der die beleuchteten Bereiche B1 und B2 nicht überlappen und sogar ein freier Bereich zwischen ihnen besteht. Wie in der Figur dargestellt, können bei dieser Anordnung Lagen auftreten, bei denen weder mit dem einen noch mit dem anderen Beleuchtungsbereich eine exakte Auswertung möglich ist. Dementsprechend ist es im Rahmen der vorliegenden Erfindung bevorzugt, wenn die beleuchteten Bereiche überlappen oder zumindest direkt aneinander angrenzen.

In Figur 5E ist ebenfalls eine weniger bevorzugte Ausführungsform dargestellt, Die beleuchteten Bereiche sind in diesem Fall so groß gewählt, daß sie bei einer mittigen Lage der Nachweiszone beide über die Nachweiszone hinausragen. Eine exakte Auswertung der Nachweiszone ist mit keinem der beiden Bereiche möglich. Im Rahmen der vorliegenden Erfindung ist es daher bevorzugt, wenn die Gesamtbreite (b) der beiden Lichtquellen kleiner ist als die entsprechende Breite der Nachweiszone. Entsprechend muß auch die Größe jedes einzelnen der Beleuchtungsbereiche kleiner sein als die Nachweiszone. Wie bereits erwähnt, wird man bestrebt sein, die beleuchteten Bereiche so groß wie möglich zu machen, um eine maximale Signalausbeute und damit ein gutes Signal-/Rauschverhältnis zu bekommen. Im Einzelfall muß ein Kompromiß zwischen der Größe der Beleuchtungsbereiche sowie deren Überlappung geschlossen werden, der einerseits sicherstellt, daß bei den zu erwartenden Lagetoleranzen stets einer der beleuchteten Bereiche voll auf der Nachweiszone liegt und andererseits das von einem einzelnen Beleuchtungsbereich erhaltene Signal groß genug ist, um die notwendige Genauigkeit der Auswertung zu gewährleisten.

Figur 5F zeigt eine Darstellung, mit der die maximal zulässige Lagetoleranz für eine vorgegebene Anordnung bestimmt werden kann. Es sind zwei beleuchtete Bereiche B 1 und B2 dargestellt, die in Richtung der Lagetoleranz jeweils die Breite (d) aufweisen. Die beleuchteten Bereiche B1 und B2 überlappen sich in Richtung der Lagetoleranz um die Strecke a, so daß sich eine Gesamtbreite b von 2 d - a ergibt. In der Grenzlage P1 befindet sich B2 noch vollständig auf der Nachweiszone, während sich in der entgegengesetzten Grenzlage P2 (gestrichelt) der Bereich B 1 gerade noch vollständig auf der Nachweiszone befindet. Hieraus ergibt sich, daß die durch die Anordnung maximal tolerierte Lagetoleranz X - a beträgt, wobei X die Breite der Nachweiszone in Richtung der Lagetoleranz ist. Ist somit die Breite X der Nachweiszone bekannt und ebenfalls die maximal auftretende Lageverschiebung von einer Extremlage in die andere (Tₘₐₓ), so kann die notwendige Überlappung a der beleuchteten Bereiche als X - Tₘₐₓ berechnet werden.

Wie bereits ausgeführt, sollte die Breite b; (b = 2 d - a) kleiner sein als X, um den in Figur 5E dargestellten Fall zu vermeiden. Verallgemeinert auf unterschiedliche Durchmesser (d1, d2) ergibit sich: d1 + d2 - a < X. Ist dementsprechend die notwendige Überlappung a in Anbetracht der zu erwartentenden Lagetoleranz gewählt worden, so kann hiermit der maximale Durchmesser d (bzw. bei nicht runden Bereichen die Breite) eines einzelnen beleuchteten Bereiches wie folgt berechnet werden: d = (X + a)/2. Bevorzugt sollte die maximale Überlappung der Bereiche so gewählt werden, daß sie kleiner als der halbe Durchmesser der Breite ist (a < (d1 +d2)/2). Für eine geeignete Wahl der Überlappung ist im Regelfall nicht nur die lineare Überlappung a wichtig, sondern auch das Verhältnis der Größe der überlappenden Fläche (F_{ü}) zur Fläche eines bestrahlten Bereiches (F_{B}). Experimentell hat sich ergeben, daß F_{ü}/F_{B} vorteilhaft kleiner als 0,3 ist und besonders vorteilhaft zwischen 0,2 und 0,1 liegt.

Die vorstehenden geometrischen Überlegungen sollen nicht darüber hinwegtäuschen, daß zur Ermittlung der optimalen Verhältnisse in der Regel Experimente notwendig sind. Dies ergibt sich schon daraus, daß die dargestellten beleuchteten Bereiche die wahren Verhältnisse nur zum Teil beschreiben können. Im Regelfall wird man davon ausgehen können, daß es sinnvoll ist, mit Bereichen zu kalkulieren, die etwa 90 % der Gesamtintensität beschreiben. Hieraus ergibt sich jedoch, daß ein gewisser Teil an reflektierter Strahlung bereits von außerhalb der Nachweiszone stammt, wenn der eingezeichnete, beleuchtete Bereich randlagig ist. In der Praxis stellt sich weiterhin das Problem, daß die Justage der Lichtquellen produktionstechnisch schwankt und somit ebenfalls Toleranzen in der Überlappung der beleuchteten Bereiche einkalkuliert werden müssen. In der Praxis wird man die Auslegung einer verwendeten Vorrichtung daher bevorzugt so durchführen, daß bei Extremlage mindestens eine der Lichtquellen die Nachweiszone voll bestrahlt und ca. 10 % des Leuchtfleckdurchmessers von der nächstgelegenen Kante der Nachweiszone entfernt ist.

Figur 6 zeigt eine Nachweiszone und die auf ihr bestrahlten Bereiche B1, B2 sowie den Bereich A. Der in Figur 6 dargestellte Pfeil zeigt die Flußrichtung der Probeflüssigkeit in einem Kapillarspalttestelement gemäß Figur 1 an. Demnach kommt die Flüssigkeit zunächst mit der Nachweiszone unterhalb der Bereiche B 1 und B2 und darauffolgend mit der Zone A in Kontakt. Vorteilhaft wird die Lage des Bereiches A so gewählt, daß er nicht oder nur zum Teil mit den Bereichen B 1 und B2 überlappt. Während eine Auswertung der Bereiche B 1 und B2 bevorzugt in einem Wellenlängenbereich durchgeführt wird, in dem Probe als solche nicht, jedoch die in der Nachweiszone gebildete Farbe absorbiert, wird zur Vermessung des Bereiches A bevorzugt eine Wellenlänge eingesetzt, bei der die Probe selbst absorbiert. Im Falle von wässrigen Flüssigkeiten kann zur Auswertung des Bereiches A beispielsweise Infrarotstrahlung verwendet werden, die im Bereich der Wasserbanden liegt. Vorzugsweise wird jedoch eine Wellenlänge im Bereich von 800 bis 950 nm eingesetzt, mit der eine Absorption der Bluteigenfarbe detektiert werden kann. Nach Applikation von Probeflüssigkeit in ein Kapillarspalttestelement gemäß Figur 1 wird im Bereich A fortlaufend gemessen und die durch die Nachweiszone transmittierte oder von der Nachweiszone remittierte Strahlung detektiert. Dies kann mit dem gleichen Detektor erfolgen, mit dem auch später die Auswertung der Bereiche B1 und B2 erfolgt. Vorzugsweise wird jedoch ein spezieller Detektor eingesetzt, der auf den für den Bereich A verwendeten Strahlungsbereich angepaßt ist.

Figur 7 zeigt den mittels Auswertung von Bereich A gewonnenen Signalverlauf über die Zeit. Zum Zeitpunkt 0 wurde Blutflüssigkeit am Kapillarspalt aufgegeben. Während der Zeitspanne I wird im Bereich A für alle Kurven kein nennenswerter Remissionsabfall gemessen. Im Bereich II kann für die Kurven K1, K2 und K3 (Glucosekonzentration: K1:25 mg / d1; K2 : 250 mg / d1; K 3 : 500 mg / d1), die mit Kapillarblut aufgenommen wurden, ein Remissionsabfall festgestellt werden. Der Remissionsabfall gibt zu erkennen, daß Probeflüssigkeit angekommen ist. Das Gerät kann nunmehr dem Benutzer anzeigen, daß er mit einer Zugabe von Probeflüssigkeit aufhören kann, da zur Durchführung des analytischen Tests ausreichend Flüssigkeit vorhanden ist. Dies hat für den Benutzer den Vorteil, daß mit kleineren Blutmengen gearbeitet und die Applikation zeitlich verkürzt werden kann. Im Bereich IV in Figur 7 ist ein fortschreitender Remissionsabfall zu erkennen, der auf die Bildung von Farbstoff in der Nachweiszone zurückgeht. Wie zu erkennen, wäre eine Anzeige, daß ausreichend Probe vorhanden ist, aufgrund einer Farbbildung in der Nachweiszone erst Sekunden später möglich, da die Farbbildung eine gewisse Zeit beansprucht. Der Zeitgewinn von 3 bis 4 Sekunden stellt für den Benutzer bereits einen recht großen Gewinn an Komfort dar.

In Figur 7 ist weiterhin die Kurve K4 dargestellt, die mittels einer farblosen Glucoselösung und einer Detektion bei 880 nm erhalten wurde. Im Gegensatz zu den Kurven K1, K2 und K3 zeigt diese Kurve keinen wesentlichen Remissionsabfall in den Zeitbereichen II und III, sondern erst im Bereich IV wenn eine Farbbildung einsetzt. Aufgrund des Zeitverhaltens des im Bereich A der Nachweiszone detektierten Signals kann somit unterschieden werden, ob es sich um Probeflüssigkeit, insbesondere Blut, oder eine Glucoselösung zur Kontrolle bzw. Kalibration des Gerätes handelt. Erkennt das Gerät, daß eine Kontrollösung verwendet wurde, so kann es eine Messung durchführen und sich selbst kalibrieren. Hierzu kann beispielsweise ein Korrekturfaktor verwendet werden, der sich aus dem Quotienten zwischen gemessener Konzentration und wahrer Konzentration der Kontrollösung errechnet. Spätere Meßwerte können dann vom Gerät automatisch durch Division durch den Korrekturfaktor korrigiert werden. Die wahre Konzentration der Kontrollösung kann beispielsweise im Gerät abgespeichert sein, insbesondere wenn nur eine entsprechend eingestellte Kontrollösung eingesetzt wird oder die Konzentration kann vom Benutzer in das Gerät eingegeben werden.

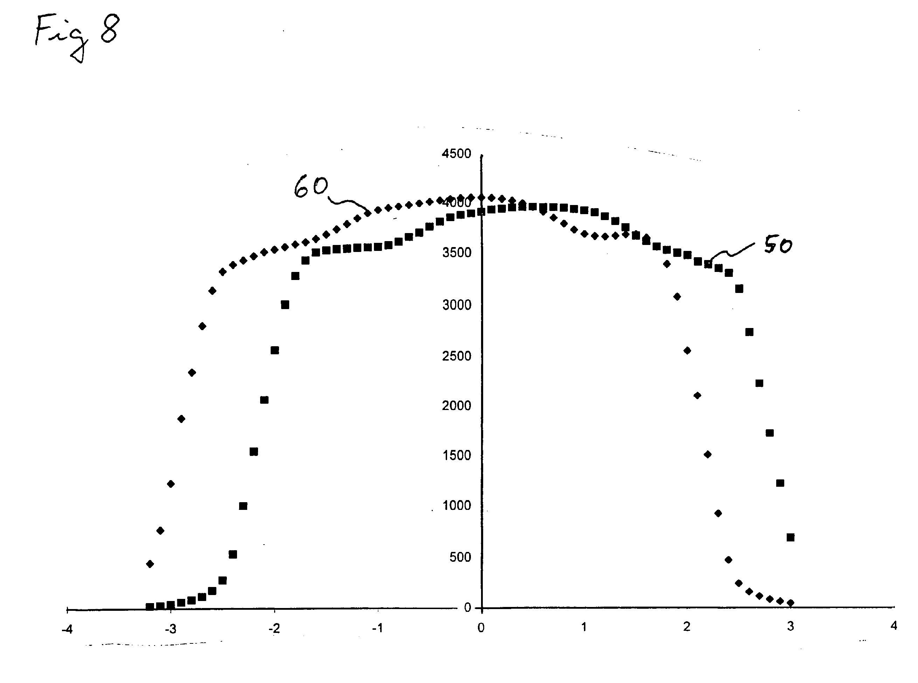

Figur 8 zeigt zwei am Detektor (25; Fig. 2) gemessene Signalverläufe bei verschiedenen Positionen des Testelementes. Auf der Abszisse der Figur ist die relative Lage des Testelementes in Millimetern angegeben.

Die in der Figur 3 dargestellte Lage des Testelementes (1), bei der sich der Kapillarspalt (5) mittig oberhalb der Linse (22) befindet, stellt die Nullage dar. Positive Werte der Abszisse stellen eine laterale Verschiebung des Testelementes quer zum Kapillarspalt dar. Figur 8 zeigt somit, wie sich das gemessene Signal verhält, wenn das Testelement nicht zentrisch positioniert ist oder/und der Kapillarspalt produktionsbedingt nicht mittig im Testelement angeordnet ist.

Auf der Ordinate sind am Detektor gemessene Signale in willkürlichen Einheiten angegeben. Aufgrund der gewählten und in den Figuren 2 und 3 dargestellten Meßgeometrie wird, vom Testelement diffus reflektierte Strahlung detektiert.

Die in Figur 8 dargestellten Signalverläufe zeigen, daß die Signale in der Nähe der Nullage am höchsten sind. Dies erklärt sich daraus, daß die Messungen an einem weißen Reagenzpapier (6) ohne Probenzugabe durchgeführt werden. Im Bereich des Reagenzpapieres, unter dem sich der Kapillarspalt befindet und der nach Probenzugabe als eigentlicher Meßbereich dient, ist die Remission vor Probenzugabe am höchsten.

Außerhalb dieses Bereiches sind die Remissionen etwas niedriger, obwohl noch Remission vom Reagenzpapier erhalten wird. Dies liegt daran, daß das Reagenzpapier in diesen Bereichen mit farbiger Folie hinterklebt ist.

Kurve 50, die aus Meßpunkten gebildet ist, die als Quadrate dargestellt sind, zeigt den Signalverlauf, wenn die Lichtquelle (23) aktiviert ist. Kurve 60, die aus Meßpunkten gebildet wird, die als Rauten dargestellt sind, zeigt hingegen den Signalverlauf bei Verschiebung des Testelementes, wenn Lichtquelle (23') aktiviert ist.

Aus Figur 8 ist zu entnehmen, daß im Bereich von ca. 0 bis +1 mm eine Messung mit Lichtquelle (23) und im Bereich von ca. -1 bis 0 um eine Messung mit Lichtquelle (23') durchgeführt werden kann. Somit ergibt sich, daß mit der Anordnung eine Lagetoleranz von ±1 mm abgefangen werden kann.

## Patentansprüche

1. Verfahren zur photometrischen Auswertung eines Testelementes mit Erkennung eines Probenauftrages auf eine flächige Nachweiszone des Testelementes, mit den Schritten
- Bestrahlen eines Kontrollbereiches der Nachweiszone,
- Zuführung von Probeflüssigkeit zu der Nachweiszone in der Weise, daß eine erste Zone der Nachweiszone früher in Kontakt mit der Probeflüssigkeit kommt, als eine zweite Zone, die lateral von der ersten Zone entfernt ist,
- Überwachung der von dem Kontrollbereich reflektierten oder durch den Kontrollbereich transmittierten Strahlung,
- Erkennen einer Anwesenheit von Probeflüssigkeit in dem Kontrollbereich aufgrund einer Veränderung der reflektierten oder transmittierten Strahlung,
- Bestrahlen mindestens eines Nachweisbereiches der Nachweiszone, wobei der Nachweisbereich näher an der ersten Zone gelegen ist als der Kontrollbereich,
- Detektieren von Strahlung, die von dem Nachweisbereich reflektiert oder durch den Nachweisbereich transmittiert wurde,
- Auswertung der detektierten Strahlung zur Ermittlung der Konzentration eines Analyten in der Probeflüssigkeit,
**dadurch gekennzeichnet, daß** bei Erkennen einer Anwesenheit von Probeflüssigkeit in dem Kontrollbereich ein für einen Benutzer erkennbares Signal ausgegeben wird, daß die Zuführung von Probeflüssigkeit abgebrochen werden kann.

2. Verfahren gemäß Anspruch 1, bei dem das Testelement ein Kapillarspalt-Testelement ist.

3. Verfahren gemäß Anspruch 2, **dadurch gekennzeichnet, daß** der Kapillarspalt unterhalb der Nachweiszone verläuft.

4. Verfahren gemäß Anspruch 1, **dadurch gekennzeichnet, daß** sich der Nachweisbereich näher an der ersten Zone befindet als der Kontrollbereich.

5. Verfahren gemäß Anspruch 1, **dadurch gekennzeichnet, daß** das Bestrahlen des Kontrollbereiches mit einer Strahlung erfolgt, die von der Probeflüssigkeit absorbiert wird.

6. Verfahren gemäß Anspruch 1 oder 5, **dadurch gekennzeichnet, daß** das Bestrahlen des Nachweisbereiches mit einer Strahlung erfolgt, die von der Probeflüssigkeit im Wesentlichen nicht absorbiert wird.

7. Verfahren gemäß Anspruch 1, **dadurch gekennzeichnet, daß** das Signal eine optische und/oder akustische Anzeige ist.
